(19) Europäisches Patentamt
European Patent Office
Office européen des brevets

(11) Veröffentlichungsnummer: **0 528 266 A2**

(12) **EUROPÄISCHE PATENTANMELDUNG**

(21) Anmeldenummer: **92113311.2**

(51) Int. Cl.[5]: **C08G 65/40**, C08G 65/10

(22) Anmeldetag: **05.08.92**

(30) Priorität: **20.08.91 DE 4127507**
**19.09.91 DE 4131143**

(43) Veröffentlichungstag der Anmeldung:
**24.02.93 Patentblatt 93/08**

(84) Benannte Vertragsstaaten:
**BE DE FR GB IT NL**

(71) Anmelder: **BASF Aktiengesellschaft**
**Carl-Bosch-Strasse 38**
**W-6700 Ludwigshafen(DE)**

(72) Erfinder: **Aumueller, Alexander, Dr.**
**Rieslingweg 25**
**W-6730 Neustadt(DE)**
Erfinder: **Eberle, Wolfang, Dr.**
**Am Hemel 20**
**W-6500 Mainz 1(DE)**
Erfinder: **Heinz, Gerhard, Dr.**
**Im Vogelsang 2**
**W-6719 Weisenheim(DE)**
Erfinder: **Hupfeld, Bernd, Dr.**
**Mausbergweg 6**
**W-6720 Speyer(DE)**
Erfinder: **Husemann, Christiane, Dr.**
**Joseph-v.-Eichendorff Strasse 4**
**W-6730 Neustadt(DE)**
Erfinder: **Koch, Juergen, Dr.**
**Mainstrasse 5**
**W-6708 Neuhofen(DE)**
Erfinder: **Reichelt, Helmut Dr.**
**Johann-Gottlieb-Fichte-Strasse 56**
**W-6730 Neustadt(DE)**

(54) **Verfahren zur Herstellung von Polyarylethern.**

(57) Verfahren zur Herstellung von Polyarylethern der nachstehenden allgemeinen Formel I oder Ia

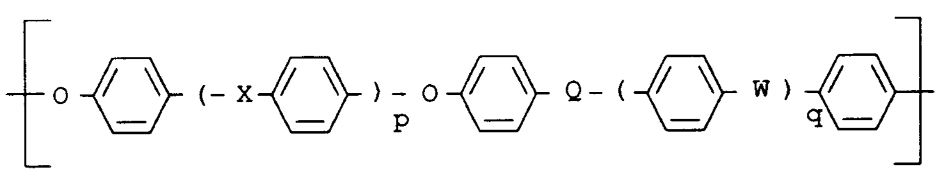

(I)

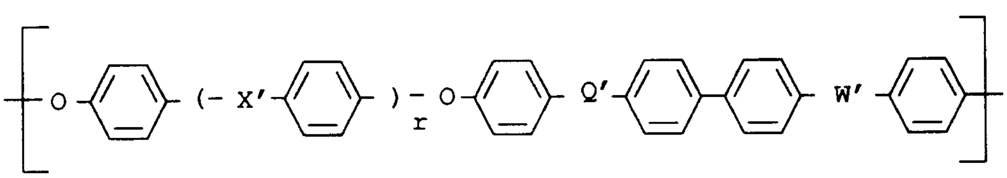

(Ia)

durch Kondensation mindestens eines entsprechenden Bisphenols mit mindestens einem entsprechenden aromatischen Dichlorid in Gegenwart eines Alkalimetallcarbonats in einem dipolar-aprotischen Lösungsmittel, das erfindungsgemäß in Gegenwart eines Katalysators ausgeführt wird, ausgewählt aus den Alkalimetallnitriten und der Gruppe der Verbindungen der allgemeinen Formel II

EP 0 528 266 A2

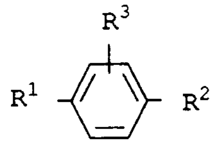

II,

worin $R^1$ und $R^3$ für Wasserstoff, $C_7$- bis $C_{16}$-Phenylalkyl, $C_1$- bis $C_{12}$-Alkoxy, Fluor, Chlor, Brom, Jod oder eine Nitrogruppe stehen und
$R^2$ eine Nitrogruppe oder eine Nitrosogruppe bedeutet, oder einen Rest der Struktur

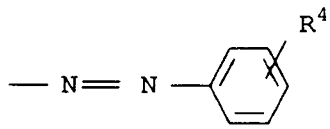

,

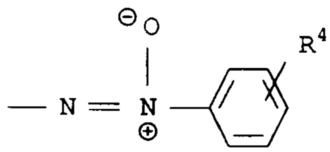

,

oder 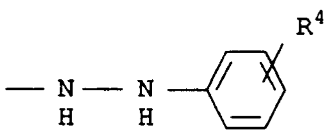

,

in der $R^4$ für Wasserstoff, $C_1$- bis $C_4$-Alkyl, Fluor, Chlor, Brom oder Jod steht.

Die Erfindung betrifft ein Verfahren zur Herstellung von aromatischen Polyetherketonen und Polyethersulfonen.

Polyarylether können auf elektrophilem Wege hergestellt werden, wie z.B. in US 4 709 007, US 3 791 890 oder DE 1 645 153 beschrieben. Die nukleophile Polykondensation von Bisphenolen mit Dihalogenaromaten zur Synthese von Polyarylethern ist ebenfalls bekannt z.B. aus US 4 105 636 oder EP 1879. Bei nukleophiler Kondensation werden hochmolekulare Polyaryletherketone nur dann erhalten, wenn man als Dihalogenaromaten die verhältnismäßig teuren Difluorverbindungen einsetzt. Nach EP-B-1879 kann ein Teil der Difluormonomeren durch Dichlormonomere ersetzt werden. DE-A-38 29 283 beschreibt einen Zweistufenprozeß zur Herstellung von Polyetherketonen, bei dem in einer ersten Stufe die Gesamtmenge an Bisphenol und Dichloraromat und in einer zweiten Stufe der Difluoraromat für die Kondensation eingesetzt werden.

Aufgabe der Erfindung ist ein Verfahren zur Herstellung von Polyarlyethern aus Bisphenolen und Dichloraromaten unter Zusatz von Katalysatoren, das ohne die Verwendung entsprechender Difluorverbindungen auskommt.

Es wurde nun gefunden, daß sich Bisphenole und Dichloraromaten zu hochmolekularen Verbindungen polykondensieren lassen, wenn die Kondensation in Gegenwart von gewissen Stickstoffverbindungen vorgenommen wird.

Man erhält durch den erfindungsgemäßen Zusatz bei sonst gleichen Bedingungen Verbindungen mit höherem Molekulargewicht als ohne den Zusatz, wie der nachstehende Vergleich zeigt.

Unmittelbarer Erfindungsgegenstand ist ein Verfahren zur Herstellung von Polyarylethern der nachstehenden allgemeinen Formel I oder Ia

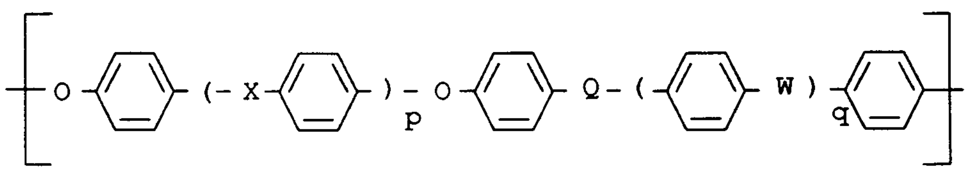

(I)

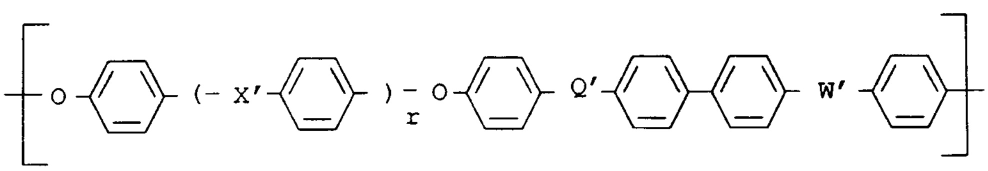

(Ia)

durch Kondensation mindestens eines entsprechenden Bisphenols mit mindestens einem entsprechenden aromatischen Dichlorid in Gegenwart eines Alkalimetallcarbonats in einem dipolar-aprotischen Lösungsmittel, das erfindungsgemäß in Gegenwart eines Alkalimetallcarbonats in einem dipolar-aprotischen Lösungsmittel, das erfindungsgemäß in Gegenwart eines Katalysators ausgeführt wird, ausgewählt aus den Alkalimetallnitriten und der Gruppe der Verbindungen der allgemeinen Formel II

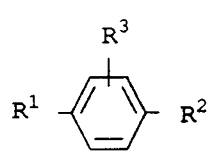

II,

worin $R^1$ und $R^3$ für Wasserstoff, $C_7$- bis $C_{16}$-Phenylalkyl, $C_1$- bis $C_{12}$-Alkoxy, Fluor, Chlor, Brom, Jod oder eine Nitrogruppe stehen und

$R^2$ eine Nitrogruppe oder eine Nitrosogruppe bedeutet, oder einen Rest der Struktur

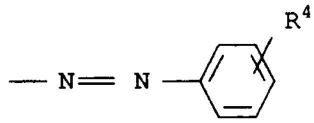

,

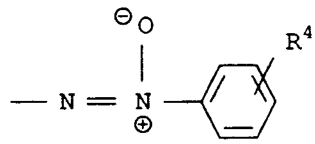

,

oder 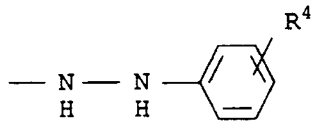

,

in der $R^4$ für Wasserstoff, $C_1$- bis $C_4$-Alkyl, Fluor, Chlor, Brom oder Jod steht.

Ist $R^2$ eine Nitrogruppe oder Nitrosogruppe, so muß mindestens einer der Reste $R^1$ oder $R^3$ Halogen wie Fluor, Chlor, Brom oder Jod sein.

Die wirksame Menge Alkalinitrit ist z.B. 5 bis 50 mol-%, bezogen auf das Dichlorid, bevorzugt 10 bis 40 mol-% und besonders bevorzugt 12 bis 30 mol-%.

Von den übrigen Stickstoffverbindungen werden i.a. 1 bis 20 mol-%, bezogen auf das Dichlorid, bevorzugt 2 bis 15 mol-% benötigt.

Die Polykondensation des Bisphenols mit der dichloraromatischen Verbindung entspricht ansonsten weitgehend dem üblichen Verfahren, d.h. die Verbindung werden in stöchiometrischer Menge zwischen 130 und 400 °C in einem dipolar aprotischen Lösungsmittel in Gegenwart eines Alkalimetallcarbonats und des erfindungsgemäßen Katalysators umgesetzt. Die erhaltenen Polyarylether sind aufgebaut aus

bis zu 100 mol-% Einheiten der allgemeinen Formel I

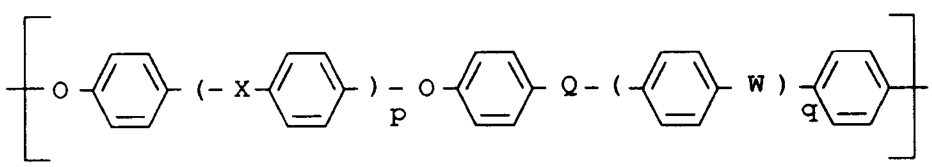

(I)

und/oder

bis 100 mol-% Einheiten der allgemeinen Formel Ia

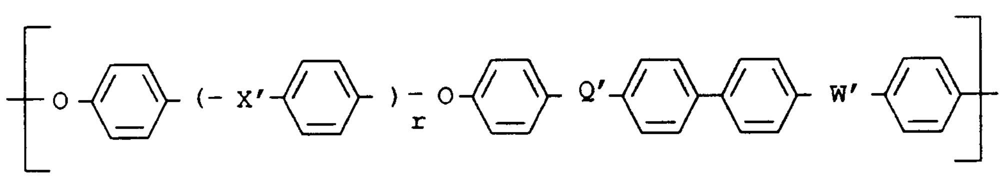

(Ia)

wobei X,X', Q,Q', W und W' unabhängig voneinander $-SO_2-$, -O-, -CO-, eine chem. Bindung oder -CRR'- sein können, R und R' jeweils Wasserstoffatome, $C_1$-$C_6$-Alkyl- oder $C_1$-$C_6$-Alkoxygruppen, Arylgruppen oder ihre Fluor- oder Chlorderivate darstellen und p, q und r jeweils den Wert 0 oder 1 haben, oder ihren kernsubstituierten $C_1$-$C_6$-Alkyl- oder $C_1$-$C_6$-Alkoxy-, Aryl-, Chlor- oder Fluorderivaten.

Zur Herstellung dieser Polyarylether werden z.B. die nachstehenden Monomeren verwendet.

| | |
|---|---|
| 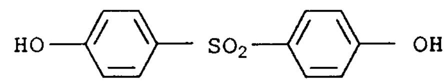 | 4,4'-Dihydroxydiphenylsulfon |
| 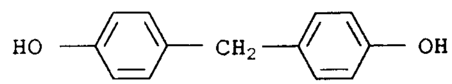 | Bis-(4-hydroxyphenyl)methan |
| 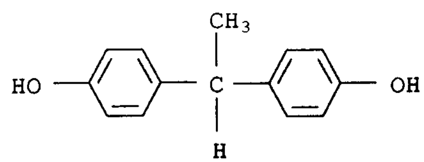 | 1,1-Bis(4-hydroxyphenyl)ethan |
| 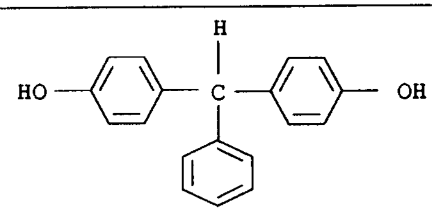 | 1-Phenyl-1,1-bis-(4-hydroxyphenyl)-methan |

| | |
|---|---|
| 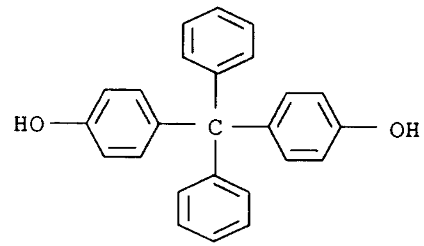 | Bisphenyl-bis-(4-hydroxyphenyl)methan |
| 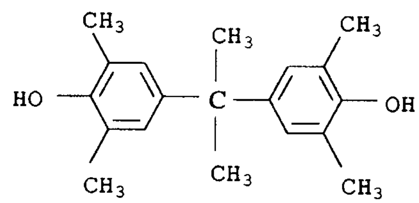 | Tetramethylbisphenol A |
| 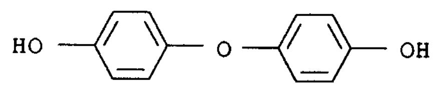 | 4,4'-Dihydroxydiphenylether |
| 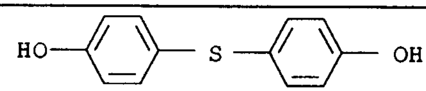 | 4,4'-Dihydroxydiphenylsulfid |
| 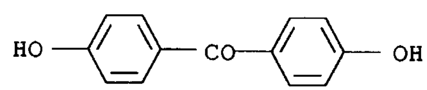 | 4,4'-Dihydroxybenzophenon |

| | |
|---|---|
| 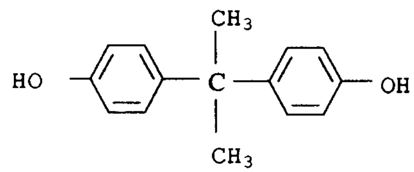 | Bisphenol A |
| 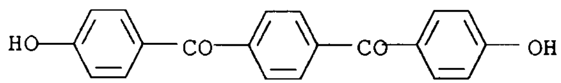 | 1,4-Di-(4-hydroxybenzoyl)benzol |
| 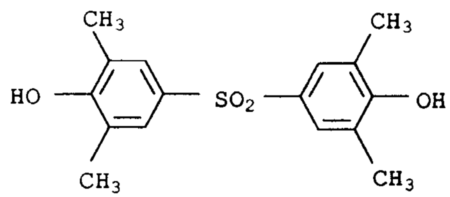 | 3,3'5,5'-Tetramethyl-4,4'-dihydroxy-diphenylsulfon |
| 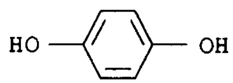 | Hydrochinon |
| 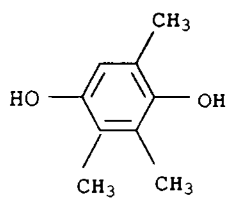 | 2,3,6-Trimethylhydrochinon |

| | |
|---|---|
| 4,4'-Dihydroxybiphenyl | 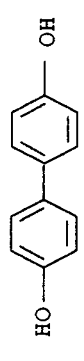 |
| 3,3'5,5'-Tetramethyl-4,4'-dihydroxybiphenyl | 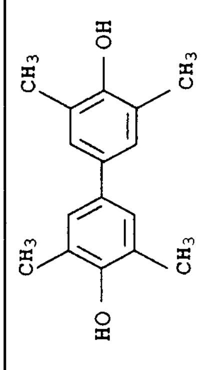 |
| 4,4'-Bis(4-hydroxybenzoyl)diphenylether | 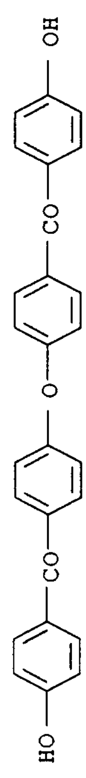 |

Von den vorstehend aufgeführten Dihydroxyverbindungen werden Hydrochinon und 4',4'-Dihydroxydiphenylsulfon besonders bevorzugt.

| | |
|---|---|
| 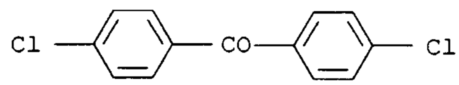 | 4,4'-Dichlorbenzophenon |
| 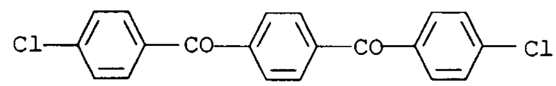 | 1,4-Bis(4-chlorbenzoyl)benzol |
| 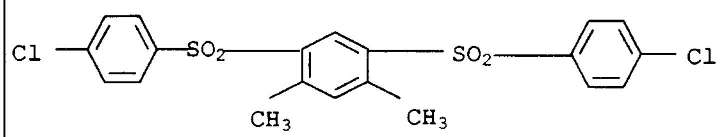 | 1,5-Dimethyl-2,4-di(4'-chlorphenylsulfonyl)benzol |

Von den vorstehend aufgeführten Dichlorverbindungen werden 4,4-Bis(4-chlorphenylsulfonylbiphenyl und Dichlorbenzophenon bzw. die entsprechenden Polykondensate besonders bevorzugt.

Als Monomere mit Biphenyleinheiten, die zur Herstellung von entsprechenden Polymeren mit eingesetzt werden, seien nur stellvertretend genannt:

| | |
|---|---|
| 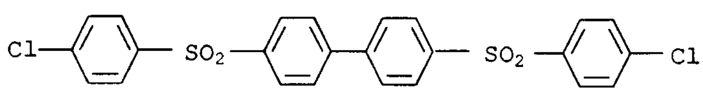 | 4,4'-Bis-(4-chlorphenylsulfonyl)-biphenyl |
| 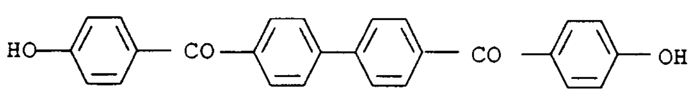 | 4,4'-Bis-(4-hydroxybenzoyl)-biphenyl |

Die vorstehend genannten Verbindungen können prinzipiell in beliebiger Kombination miteinander umgesetzt werden.

Besonders geeignet ist die Umsetzung in dipolar aprotischen Lösungsmitteln in Gegenwart von wasserfreien Alkalimetallcarbonaten. Besonders bevorzugt als Lösungsmittel sind N-Methylpyrrolidon und bei der Herstellung von Polyetherketonen vorzugsweise sulfongruppenhaltige Lösungsmittel, insbesondere Diphenylsulfon. Die Menge an Lösungsmittel beträgt i.a. 5 bis 100 Mol, vorzugsweise 5 bis 20 Mol, bezogen auf 1 Mol Monomere. Dies ergibt einen bevorzugten Feststoffgehalt der Reaktionsmischung im Bereich von 5 bis 50 Gew.-%, besonders bevorzugt 10 bis 40 Gew.-%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfern werden. Als Azeotropbildner eignen sich alle Verbindungen, die bei Normaldruck im Bereich der Reaktionstemperatur sieden und sich mit dem Reaktionsgemisch mischen lassen, ohne chemische Reaktionen einzugehen.

Die Reaktionstemperatur bei der Herstellung von Polyarylethersulfonen liegt i.a. im Bereich von 130 bis 220 °C, vorzugsweise bei 150 bis 210 °C; die Gesamtdauer der Umsetzung richtet sich nach dem gewünschten Kondensationsgrad, liegt aber i.a. im Bereich von 0,1 bis 15 Stunden.

Bei der Herstellung von Polyaryletherketonen sind i.a. höhere Temperaturen im Bereich von 150 bis 400 ° C, insbesondere 200 bis 350 ° C erforderlich. Vorteilhaft ist ein Temperaturverlauf, bei dem die Temperatur schrittweise erhöht wird.

Im Anschluß an die Polykondensation können zur Stabilisierung freie Phenol-Endgruppen mit einem Alkylierungs- oder Arylierungsmittel wie Methylchlorid oder 4-Fluorbenzophenon umgesetzt werden.

Zur Abtrennung des gebildeten Alkalimetallchlorids können geeignete Trenneinrichtungen, beispielsweise Klärfilter oder Zentrifugen benutzt werden.

Es ist auch möglich, aus der Schmelze ein feinverteiltes Gut zu erzeugen, das durch Extraktion mit einem geeigneten Lösungsmittel (z.B. Aceton) oder einer Lösungsmittelmischung wie z.B. eine methanol/Aceton-Mischung von Restlösungsmittel (z.B. Diphenylsulfon) befreit wird.

Anschließend kann das entstandene Alkalimetallchlorid durch Extraktion mit Wasser entfent werden.

Zur Erläuterung der nachstehenden Beispiele bzw. der Tabelle ist noch folgendes vorauszuschicken.

Bei den Polyaryletherketonen wird die inhärente Viskosität

$$\eta_{inh.} = \frac{\ln \eta_{rel.}}{C}$$

mit der Einheit dl/g verwendet.

Die Messungen werden mit einer 0,5 %igen Lösung in konz. Schwefelsäure bei 25 ° C durchgeführt.

Bei den Polyarylethersulfonen wird die reduzierte Viskosität

$$\eta_{red.} = \frac{\eta_{rel.}{}^{-1}}{C}$$

mit der Einheit dl/g verwendet.

Die Messungen werden mit einer 1 %igen Lösung in N-Methylpyrrolidon bei 25 ° durchgeführt.

Beispiel 1

In einem 1 l-Dreihalskolben mit Rührer, Destillationsbrücke und Stickstoffeinleitung wurden 200 g Diphenylsulfon, 142,10 g 4,4'-Bis-(chlorbenzoyl)-benzol, 44,00 g Hydrochinon, 42,29 g Natriumcarbonat, 2,90 g Kaliumcarbonat und 5,1 g Kaliumnitrit vorgelegt und mit Stickstoff gespült. Die Mischung wird unter $N_2$-Einleitung nach Temperaturprogramm erhitzt (2,5 h 250 ° C, 5 h 330 ° C). Das gebildete Wasser destilliert ab. Die erkaltete Mischung wird gemahlen, mit Aceton und anschließend mit Wasser extrahiert. Der Rückstand wird bei 200 ° C getrocknet.

Im Vergleichsversuch wird der Ablauf des Beispiels 1 wiederholt, jedoch ohne Zusatz von Kaliumnitrit.

Beispiel 2

In einem 1 l-Dreihalskolben mit Rührer, Destillationsbrücke und Stickstoffeinleitung wurden 300 g Diphenylsulfon, 151,41 g 4,4'-Dichlorbenzophenon, 66,00 g Hydrochinon, 85,41 g Kaliumcarbonat und 7,70 g Kaliumnitrit vorgelegt mit Stickstoff gespült und unter $N_2$-Einleitungnach Temperaturprogramm erhitzt (1,5 h 200 ° C; 1h 250 ° C; 3 h330 ° C). Die erkaltete Mischung wird gemahlen und mit Aceton und anschließend mit Wasser extrahiert. Der Rückstand wird bei 200 ° C getrocknet.

Auch hier wird ein Vergleichsversuch ohne Kaliumnitrit vorgenommen.

Beispiel 3

Man verfährt wie vorstehend beschrieben, jedoch mit geändertem Temperaturprogramm (1,5 h 200 ° C; 1 h 200 ° C, 1 h 300 ° C). Vergleich ohne Nitritzusatz.

| Beispiel | Katalysator | Temperaturprogramm | $\eta_{inh.}$ (dl/g) *) | Polymertyp |
|---|---|---|---|---|
| 1 | $KNO_2$ | 2,5 h 250°C, 5 h 330°C | 1,05 | PEEKK |
| Vergleich | -- | 2,5 h 250°C, 5 h 330°C | 0,80 | PEEKK |
| 2 | $KNO_2$ | 1,5 h 200°C, 1 h 250°C, 3 h 330°C | 1,20 | PEEK |
| Vergleich | -- | 1,5 h 200°C, 1 h 250°C, 3 h 330°C | 0,84 | PEEK |
| 3 | $KNO_2$ | 1,5 h 200°C, 1 h 250°C, 3 h 300°C | 0,92 | PEEK |
| Vergleich | -- | 1,5 h 200°C, 1 h 250°C, 3 h 300°C | 0,49 | PEEK |

*) gemessen 0,5 %ig in konz. $H_2SO_4$ bei 25°C

Beispiel 4

259,26 g 4,4'-Bis-(4-chlorphenylsulfonyl)-biphenyl (hergestellt aus 4-Chlorbenzolsulfonsäurechlorid und Biphenyl in 1,2-Dichlorbenzol als Lösungsmittel), 125,14 g 4,4'-Dihydroxydiphenylsulfon, 76.0 g Kaliumcarbonat, 7,93 g Azoxybenzol und 1 l-N-Methylpyrrolidon werden unter Stickstoff auf 190 ° C erhitzt. Innerhalb

einer Stunde ist die Hauptmenge des gebildeten Wassers abdestilliert. Danach wird noch 5 h bei 190 ° C gerührt, das Reaktionsprodukt durch Fällen mit Wasser abgetrennt, gewaschen und bei 120 ° C getrocknet. Der erhaltene Polyarylether hat eine reduzierte Viskosität von 0,73 dl/g gemessen als 1 %ige Lösung in N-Methylpyrrolidon bei 25 ° C.

Verfährt man entsprechend, aber ohne Zusatz von Azoxybenzol so weist das Reaktionsprodukt eine reduzierte Viskosität von 0,19 dl/g auf.

**Patentansprüche**

1. Verfahren zur Herstellung von Polyarylethern der nachstehenden allgemeinen Formel I oder Ia

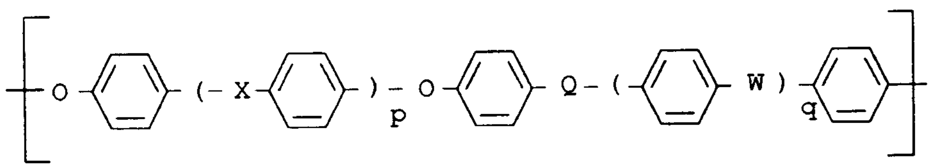

(I)

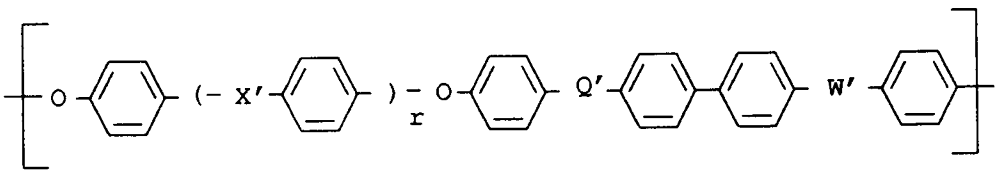

(Ia)

durch Kondensation mindestens eines entsprechenden Bisphenols mit mindestens einem entsprechenden aromatischen Dichlorid in Gegenwart eines Alkalimetallcarbonats in einem dipolar-aprotischen Lösungsmittel, dadurch gekennzeichnet, daß es in Gegenwart eines Katalysators ausgeführt wird, ausgewählt aus den Alkalimetallnitriten und der Gruppe der Verbindungen der allgemeinen Formel II

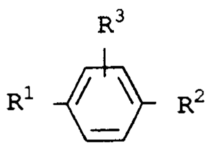

II,

worin $R^1$ und $R^3$ für Wasserstoff, $C_7$- bis $C_{16}$-Phenylalkyl, $C_1$- bis $C_{12}$-Alkoxy, Fluor, Chlor, Brom, Jod oder eine Nitrogruppe stehen und

$R^2$ eine Nitrogruppe oder eine Nitrosogruppe bedeutet, oder einen Rest der Struktur

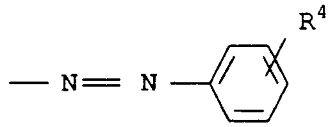 ,

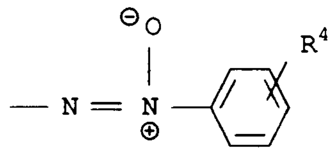 ,

oder 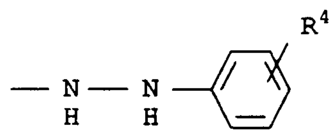 ,

in der $R^4$ für Wasserstoff, $C_1$- bis $C_4$-Alkyl, Fluor, Chlor, Brom oder Jod steht.